# EUROPÄISCHE PATENTSCHRIFT

(11) **EP 1 025 349 B1**
(45) Veröffentlichungstag und Bekanntmachung des Hinweises auf die Patenterteilung: **22.01.2003**
(21) Anmeldenummer: 98952716.3
(22) Anmeldetag: 20.10.1998
(51) Int. Cl.: F02B 27/02, F16K 5/04, F02D 9/16

(54) **SCHALTWALZE**
DRUM CONTROLLER
TAMBOUR D'OUVERTURE OU DE FERMETURE

(30) Priorität: 21.10.1997 DE 19746217
(43) Veröffentlichungstag der Anmeldung: 09.08.2000
(73) Patentinhaber: FILTERWERK MANN & HUMMEL GmbH, 71631 Ludwigsburg (DE)
(72) Erfinder: JESSBERGER, Thomas, D-71277 Rutesheim (DE); NEUSCHWANDER, Helmut, D-71636 Ludwigsburg (DE); RENTSCHLER, Klaus, D-71126 Gäufelden (DE)
(74) Vertreter: Voth, Gerhard, Dipl.-Ing.
(86) Internationale Anmeldenummer: EP9806608
(87) Internationale Veröffentlichungsnummer: WO99020879

(56) Entgegenhaltungen:
- EP-A- 0 182 473
- EP-A- 0 691 461
- WO-A-83/02800
- WO-A-97/34097
- DE-A- 1 945 955
- DE-A- 4 228 334
- DE-A- 4 344 504

## Beschreibung

Die Erfindung betrifft eine Schaltwalze, insbesondere zur Verwendung in einer Saugrohranlage für eine Mehrzylinderbrennkraftmaschine nach dem Oberbegriff des Anspruchs 1 bzw. nach dem Oberbegriff des Anspruchs 5.

Bei einer Saugrohranlage gemäß EP B 0 177 794 sind Einzelsaugrohre mit einem Sammelsaugrohr zu einer Einheit zusammengefaßt, an die als weiteres Bauteil ein Ansaugverteiler angeflanscht ist, der einerseits über ein Drosselklappenteil mit dem Sammelsaugrohr und andererseits mit den Einzelsaugrohren in Verbindung steht. Die zweiten Einzelsaugrohre können durch Klappen abgesperrt oder freigegeben werden, die auf Wellen angeordnet sind, welche den Ansaugverteiler durchdringen. Diese bekannte Saugrohranlage ist in der Herstellung verhältnismäßig aufwendig und bereitet Probleme im Bezug auf ein einwandfreies Zusammenwirken der im Ansaugverteiler gelagerten Schwenkklappen mit den in einem anderen Bauteil angeordneten zweiten Einzelsaugrohren.

Aus der DE A 42 44 504 ist eine Saugrohranlage für eine Mehrzylinderbrennkraftmaschine bekannt. Die Saugrohranlage weist einen rohrförmigen Ansaugverteiler auf, von dem erste Einzelsaugrohre ausgehen, die sich in einem Bogen um den Ansaugverteiler erstrecken und zu den einzelnen Zylindern der beiden Zylinderreihen führen. Zweite kürzere Einzelsaugrohre gehen ebenfalls von dem Ansaugverteiler aus und münden in die zugehörigen Einzelsaugrohre. Der Ansaugverteiler und die ersten und zweiten Einzelsaugrohre sind von einem einstückigen Bauteil gebildet das eine Längsbohrung aufweist. In die Längsbohrung ist eine Schaltwalze eingesetzt, die für jedes zweite Einzelsaugrohr einen Durchbruch aufweist, der durch Drehen der Schaltwalze in- oder außer Fluchtung mit dem betreffenden zweiten Einzelsaugrohr gebracht werden kann. Es hat sich gezeigt, daß eine solche Schaltwalze Verwirbelungen der Ansaugluft erzeugt. Diese Verwirbelungen führen bei bestimmten Motorbetriebszuständen zu einer Leistungsminderung der Mehrzylinderbrennkraftmaschine. Die Verwirbelung ist insbesondere dort von Nachteil, wo die Schaltwalze sich durch sämtliche Ansaugkanäle erstreckt und in den Ansaugkanälen, die nicht mit der Schaltwalze verschlossen werden sondern offen bleiben müssen, eine starke Veränderung der Kanalkontur hervorrufen.

Aus der DE 1945955 ist ein Schaltsystem für Eihlaßkanäle bekannt. Mit diesem Schalsystem können mehrere Einlaßkanäle wechselweise geschaltet werden. Ein Nachteil der Einrichtung ist darin zu sehen, dass keine zusätzlichen offenen Kanäle vorgesehen sind, welche unabhängige von der Schaltstellung der Schaltwalze geöffnet sind bzw. geöffnet bleiben.

Der Erfindung liegt daher die Aufgabe zugrunde eine Schaltwalze zu schaffen, die die genannten Nachteile vermeidet, einfach herstellbar ist und die Strömung der Ansaugluft nicht nachteilig beeinflußt.

Diese Aufgabe wird ausgehend von dem Oberbegriff des Anspruchs 1 durch dessen kennzeichnenden Merkmale gelöst.

Der Vorteil der Erfindung besteht darin, daß die Schaltwalze aus zwei Bauteilen besteht.
Zum einen besteht diese aus einer beweglichen Schalthülse und zum anderen aus einem feststehenden Kern, wobei ein Schließen und öffnen des Einzelsaugrohres durch die Drehbewegung der Schalthülse erfolgt Der feststehende Kern hat die Aufgabe, die strömungsbeeinflußende Kontur des Einzelsaugrohres zu optimieren.

Gemäß der Erfindung ist der feststehende Kern an wenigstens einem Ende mit dem Ansaugverteiler verbunden. Zur Befestigung des Kerns eignet sich beispielsweise eine Steckverbindung oder eine Schraubverbindung. Im Bereich der Einzelsaugrohre erfolgt die Abstützung des feststehenden Kernes über geeignete Lagerstellen bzw. Lagerbereichen und zwar indirekt über die Schalthülse. Die Schalthülse, die sich über sämtliche Einzelsaugrohre erstreckt, ist in den Einzelsaugrohren, die nicht verschlossen werden dürfen, mit Durchbrüchen versehen und zwar derart, daß sowohl in der Geschlossenstellung als auch in der Offenstellung die Strömungskontur des offenen Einzelsaugrohres nicht beeinträchtigt wird.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert.

Es zeigt:
- Figur 1: den Schnitt durch einen Endflansch eines Ansaugverteilers
- Figur 2: den Schnitt durch einen Endflansch eines Ansaugverteilers in einer zweiten Schnittebene
- Figur 3: den Endflansch eines Ansaugverteilers mit geschlossenem Kanal
- Figur 4: den Endflansch eines Ansaugverteilers mit geöffnetem Kanal
- Figur 5: den Endflansch eines Ansaugverteilers mit einem unterbrochen offenen Kanal.

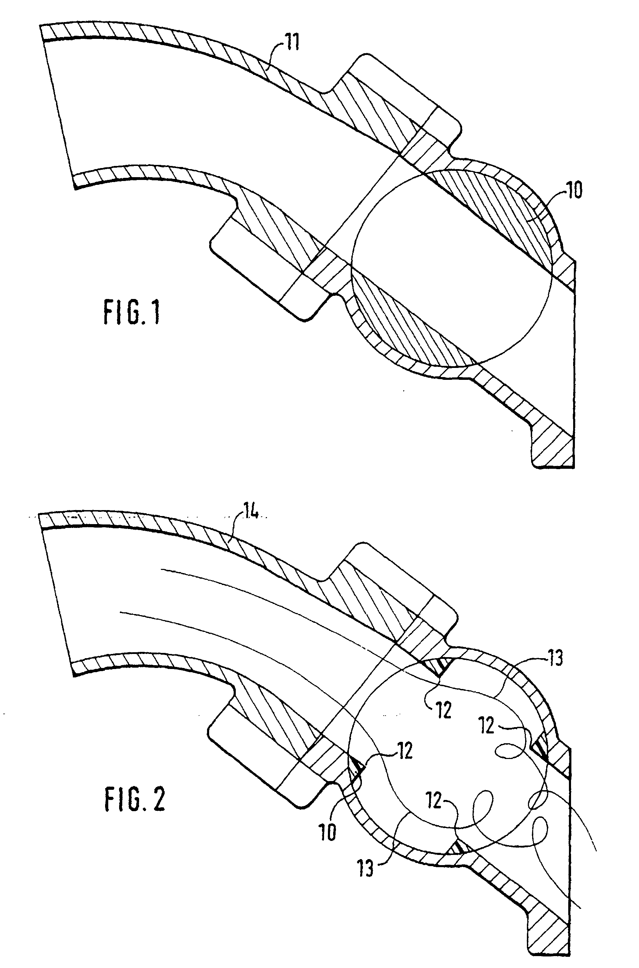

Zur Optimierung von Drehmoment und Leistung einer Verbrennungskraftmaschine werden Schaltwalzen 10, gemäß Figur 1 in Ansaugleitungen eingesetzt, mit welchen die Saugrohrlänge variiert werden kann. Zur Erzeugung eines hohen Drehmoments, wird dabei aus einem langen Kanal (Drehmomentkanal) die Luft angesaugt, für hohe Leistung und bei hoher Drehzahl wird die Luft aus einem kurzen Kanal (Leistungskanal) angesaugt. Die Schaltwalze 10 hat dabei die Aufgabe, den Leistungskanal 11 zu öffnen oder zu schließen. Die Kontur der Schaltwalze 10 entspricht dabei dem Kanalquerschnitt des Saugrohres und verhindert, daß die Strömung abreist oder behindert wird. Wenn die Schaltwalze 10 zur Kanalabschaltung eines zweizügigen Saugrohres, zum Beispiel für einen Direkteinspritzer eingesetzt werden soll, muß ein Kanal, wie in Figur 1 dargestellt, geöffnet und geschlossen werden und der zweite benachbarte Kanal, gemäß Figur 2, in beiden Schaltpositionen geöffnet bleiben. Die Kontur 12 der Schaltwalze 10 hat dabei einen nachteiligen Einfluß auf die Strömung, da es hier zu Verwirbelungen 13 oder zu einem Störmungsabriß kommt

Figur 2 zeigt, daß der zweite Kanal (Drehmomentkanal 14) in jeder Stellung der Schaltwalze 10 eine ungünstige Kontur aufweist.

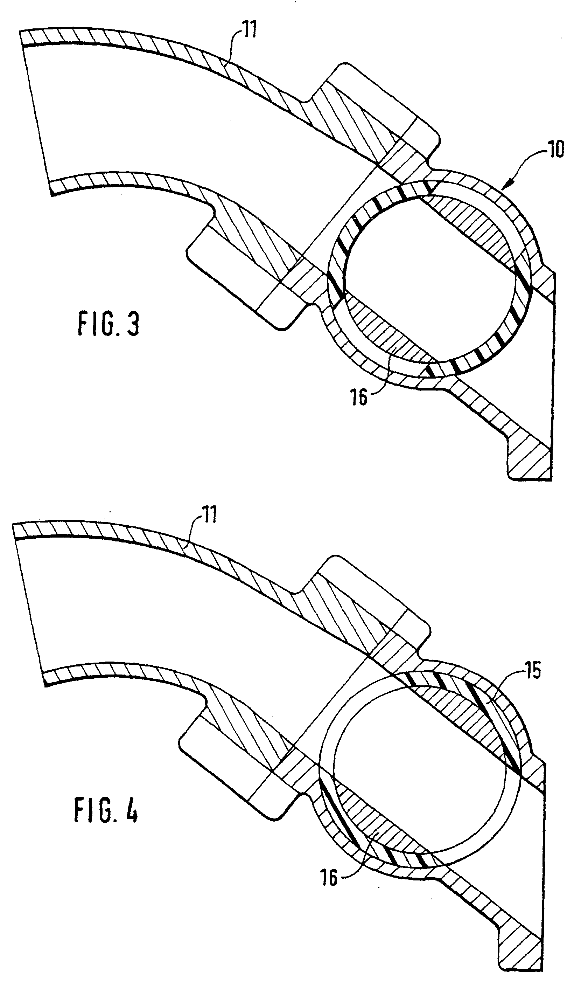

Figur 3 zeigt die Möglichkeit, mit einer Schaltwalze 10 die aus einer beweglichen Schalthülse 15 und einem feststehenden Kern 16 besteht, ohne Eingriffe in die Kontur der Einzelsaugrohre den Leistungskanal 11 zu verschließen. In der hier gezeigten Darstellung ist durch eine entsprechende Stellung der Schalthülse 15, der Leistungskanal 11 verschlossen.

Figur 4 zeigt den geöffneten Leistungskanal 11, Schalthüse 15 und Kern 16 sind deckungsgleich.

Figur 5 zeigt den Drehmomentkanal 14. Auch dieser Drehmomentkanal wird durch den Kern 16 sowie die Schalthülse 15 durchstoßen. Die Schalthülse 15 weist im Bereich des Drehmomentkanals 14 sowohl die Durchbrüche 18, 19 als auch die Durchbrüche 20, 21 auf. Dies bedeutet, daß in jeder Stellung, das heißt sowohl in der Geschlossen- als auch in der Offenstellung der Schalthülse der Drehmomentkanal 14 geöffnet bleibt und gleichzeitig keine Störung der Kanalkontur auftritt.

## Patentansprüche

1. Schaltwalze, zur Verwendung in einer Saugrohranlage für eine Mehrzylinderbrennkraftmaschine, mit einem Ansaugverteiler und nebeneinander angeordneten Einzelsaugrohren, welche in einem Flansch enden, wobei in einer Längsbohrung der Einzelsaugrohre die Schaltwalze angeordnet ist, zum Verschließen und Öffnen der Einzelsaugrohre **dadurch gekennzeichnet, dass** die Schaltwalze (10) aus einer beweglichen Schalthülse (15) und einem feststehenden Kern (16) besteht und bei einer Drehbewegung der Schalthülse (15) die Einzelsaugrohre (11) verschließt bzw. öffnet, wobei der feststehende Kem (16) an wenigstens einem Ende mit dem Ansaugverteiler (17) verbunden ist und im Bereich eines ständig geöffneten Kanals (14) die Schalthülse (15) Durchbrüche (15-21) aufweist.

## Claims

1. Drum controller which is especially used in the induction system of a multi-cylinder internal combustion engine, comprising an induction distributor and individual induction pipes arranged next to each other and ending in a flange, said controller being arranged in a longitudinal bore hole of the individual induction pipes and is used to open and close said tubes, **characterized in that** the drum controller (10) comprises a moveable sleeve (15) and a fixed core (16) and the individual induction pipes (11) are opened or closed when said sleeve (15) is rotated, the fixed core (16) being linked at least at one end with the induction distributor (17) and the sleeve (15) comprising openings (15 - 21) near a canal (14) which is always opened.

## Revendications

1. Tambour d'ouverture / fermeture pour être utilisé dans un système collecteur d'admission pour un moteur à combustion interne à plusieurs cylindres comportant un répartiteur d'admission et des tubulures d'admission individuelles disposées les unes à côté des autres qui finissent dans un flasque, le tambour d'ouverture / fermeture étant disposé dans un alésage longitudinal des tubulures d'admission individuelles afin de fermer et d'ouvrir les tubulures d'admission individuelles, **caractérisé en ce que** le tambour d'ouverture / fermeture (10) est constitué d'une douille d'ouverture /fermeture (15) mobile et un noyau fixe (16) et lequel tambour ferme ou ouvre les tubulures d'admission individuelles (11) par un mouvement de rotation de la douille d'ouverture / fermeture (15) ; le noyau fixe (16) étant relié au moins sur une extrémité avec le répartiteur d'admission (17) et la douille d'ouverture / fermeture (15) présentant des passages (15 - 21) dans la zone d'un canal (14) ouvert en permanence.
